# EUROPEAN PATENT APPLICATION

(11) **EP 2 889 077 A1**
(43) Date of publication of application: **01.07.2015**
(21) Application number: 13834046.8
(22) Date of filing: 22.08.2013
(51) Int. Cl.: B01D 71/36, B01D 39/16, B32B 5/18, B32B 27/30

(54) **VENT FILTER IMPARTED WITH OIL REPELLENCY**

(30) Priority: 27.08.2012 JP 2012186626
(71) Applicant: Nitto Denko Corporation, Ibaraki-shi, Osaka 567-8680 (JP)
(72) Inventor: IKEYAMA, Yoshiki, Ibaraki-shi Osaka 567-8680 (JP); MARUOKA, Nobuaki, Ibaraki-shi Osaka 567-8680 (JP); MASUDA, Ryota, Ibaraki-shi Osaka 567-8680 (JP); ONOHARA, Asuka, Ibaraki-shi Osaka 567-8680 (JP)
(74) Representative: Hart-Davis, Jason
(86) International application number: PCT/JP2013/004966
(87) International publication number: WO 2014/034053

(57) **Abstract**

A gas-permeable filter of the present invention has a surface coated with an oil-repellent agent. The oil-repellent agent contains a copolymer of a linear fluorine-containing hydrocarbon group-containing monomer and a crosslinkable monomer. The crosslinkable monomer contains at least one selected from an alkoxy group-containing monomer, a hydroxy group-containing monomer, and a carboxyl group-containing monomer.

## Description

### TECHNICAL FIELD

The present invention relates to a gas-permeable filter imparted with oil repellency.

### BACKGROUND ART

Vent holes are often provided in housings of various devices including: automotive electrical/electronic components such as automotive headlamps, rear lamps, fog lamps, turn lamps, motors, various pressure sensors, and pressure switches; cameras; videos; information terminals such as mobile phones; electric shavers; electric toothbrushes; and lamps for outdoor use. The main purpose of providing a vent hole in a housing of a device is to allow the interior of the device to communicate with the exterior thereof so as to avoid an excessive increase in the pressure in the housing of the device associated with an increase in the temperature therein during operation of the device. A vent hole is also provided in a housing of a battery for the purpose of discharging gases generated during operation of the battery.

In order to prevent entry of water, dust, and the like through a vent hole provided in a housing of a device, a gas-permeable filter is placed in the vent hole in some cases. A porous membrane made of a polyolefin resin or a fluorine resin is often used as a gas-permeable filter. In particular, a porous membrane obtained by stretching polytetrafluoroethylene (hereinafter referred to as "PTFE") to form a microporous structure therein is known as a highly water-repellent gas-permeable filter. However, a gas-permeable filter may be exposed to sebum, a surfactant, oil, or the like, depending on the environment in which the filter is used. Even if a highly water-repellent stretched porous PTFE membrane is used as a gas-permeable filter, entry of a liquid with a low surface tension cannot be fully prevented. Therefore, the gas-permeable filter is subjected to oil-repellent treatment using a treatment agent containing a fluorine-containing polymer, depending on the intended use of the filter.

It is well known that a fluorine-containing polymer having a linear perfluoroalkyl group (hereinafter, a "linear perfluoroalkyl group" may also be referred to as an "Rf group") is suitable for imparting oil repellency, and a fluorine-containing polymer having an Rf group is used as a treatment agent for oil-repellent treatment.

It is also known that oil repellency is imparted to a gas-permeable filter using another treatment agent together with the above-mentioned treatment agent. For example, JP 07(1995)-126428 A (Patent Literature 1) discloses treating a gas-permeable filter with a treatment agent that contains a fluorine-containing polymer having an Rf group and that also contains a fluorine resin having a fluorine-containing aliphatic cyclic structure in its main chain (claim 1, etc.). The fluorine resin having a fluorine-containing aliphatic cyclic structure has excellent film forming properties, and can be obtained, for example, by polymerization of perfluoro(2,2-dimethyl-1,3-dioxole) (paragraphs [0009] and [0011]).

### CITATION LIST

### Patent Literature

Patent Literature 1: JP 07(1995)-126428 A

### SUMMARY OF INVENTION

### Technical Problem

In an automobile, electrical/electronic components are disposed near an engine in response to the need for more efficient use of an engine room space. Therefore, in that case, gas-permeable filters used in the electrical/electronic components require resistance to high temperatures.

However, in a gas-permeable filter formed by coating the surface of a stretched porous PTFE membrane with a conventional oil-repellent agent, the oil-repellent agent that coats the porous membrane melts in a high-temperature environment, causing degradation of the oil-repellent properties.

Therefore, it is an object of the present invention to provide a gas-permeable filter capable of maintaining excellent oil-repellent properties even in a high-temperature environment.

### Solution to Problem

The present invention provides a gas-permeable filter having oil repellency. The gas-permeable filter includes a porous membrane having a surface coated with an oil-repellent agent. The oil-repellent agent contains a copolymer containing a linear fluorine-containing hydrocarbon group-containing monomer and a crosslinkable monomer. The crosslinkable monomer contains at least one selected from an alkoxy group-containing monomer, a hydroxy group-containing monomer, and a carboxyl group-containing monomer.

### Advantageous Effects of Invention

According to the present invention, it is possible to provide a gas-permeable filter capable of maintaining excellent oil-repellent properties even in a high-temperature environment.

### DESCRIPTION OF EMBODIMENTS

A gas-permeable filter according to the present invention includes a porous membrane having a surface coated with an oil-repellent agent. In the present embodiment, the case where the porous membrane is a stretched porous PTFE membrane is described, but the porous membrane used for the gas-permeable filter of the present invention is not limited to this. A commercially available product may be used as the stretched porous PTFE membrane, but an example of a method for producing the stretched porous PTFE membrane will be described below.

First, a pasty mixture obtained by adding a liquid lubricant to a PTFE fine powder is preformed. The liquid lubricant is not particularly limited as long as it can wet the surface of the PTFE fine powder and can be removed by extraction or drying. For example, hydrocarbon products such as liquid paraffin, naphtha, and white oil can be used. The appropriate content of the liquid lubricant is about 5 to 50 parts by weight per 100 parts by weight of the PTFE fine powder. The preforming may be performed at such a pressure that the liquid lubricant is not squeezed out.

Next, the preformed body is formed into a sheet shape by paste extrusion or rolling, and the formed body of PTFE is uniaxially or biaxially stretched to obtain a stretched porous PTFE membrane. The stretching of the PTFE formed body is preferably carried out after the liquid lubricant is removed.

In the present description, as is conventionally done, a porous PTFE membrane that is obtained by stretching a sheet-shaped PTFE formed body to form a microporous structure therein is referred to as a "stretched porous PTFE membrane". The stretched porous PTFE membrane typically has a characteristic microporous structure composed of fibrils and nodes, and exhibits excellent water repellency by itself.

The stretched porous PTFE membrane may be a sintered product obtained by sintering the membrane at a temperature equal to or higher than the melting point of PTFE, or may be an unsintered product that has not been subjected to this sintering.

The average pore diameter of the stretched porous PTFE membrane is preferably 0.005 to 10 µm, more preferably 0.01 to 5 µm, and particularly preferably 0.1 to 3 um. When the average pore diameter is too small, the gas permeability of the gas-permeable filter may decrease. When the average pore diameter is too large, foreign matters may leak. In addition, the thickness of the stretched porous PTFE membrane is preferably 5 to 5000 µm, more preferably 10 to 1000 µm, and particularly preferably 10 to 500 µm. When the thickness is too small, there is a risk that the strength of the membrane is insufficient or the gas-permeable filter is deformed too much due to a differential pressure between the interior and exterior of a vent housing. When the thickness is too large, the gas permeability of the gas-permeable filter may decrease.

The gas-permeable filter may be a multilayer body including: a stretched porous PTFE membrane having a surface coated with an oil-repellent agent; and a gas-permeable support for reinforcing the membrane. The use of the gas-permeable support can prevent the deformation of the gas-permeable filter due to a differential pressure. The gas-permeable support may be a single-layer body or a multilayer body formed of two or more layers. In order for the gas-permeable filter to exhibit oil repellency, at least one principal surface of the filter should be the surface of the stretched porous PTFE membrane that is coated with the oil-repellent agent.

As the gas-permeable support, a porous ultra-high molecular weight polyethylene membrane, a nonwoven fabric, a woven fabric, a net, a mesh, a sponge, a foam, a porous metallic membrane, a metallic mesh, or the like, can be used. From the viewpoints of, for example, strength, elasticity, gas permeability, workability, and weldability to containers, a nonwoven fabric or a porous ultra-high molecular weight polyethylene membrane is preferred as the gas-permeable support.

The stretched porous PTFE membrane and the gas-permeable support may be simply stacked together, may be bonded together using an adhesive agent, a hot-melt resin, or the like, or may be welded together by heat welding, ultrasonic welding, vibration welding, or the like.

As the oil-repellent agent for coating the stretched porous PTFE membrane, an oil-repellent agent that contains a copolymer containing, as constituents, a linear fluorine-containing hydrocarbon group-containing monomer and a crosslinkable monomer is used.

A linear fluorine-containing hydrocarbon group is a functional group that has a CF₃ group having a low surface free energy and that imparts oil repellency to a surface when coated with the group. The crosslinkable monomer to be copolymerized with a monomer having this linear fluorine-containing hydrocarbon group contains at least on selected from an alkoxy group-containing monomer, a hydroxy group-containing monomer, and a carboxyl group-containing monomer. This oil-repellent agent in a crosslinked state coats the surface of the stretched porous PTFE membrane. Thereby, the melting of the oil-repellent agent is suppressed even in a high-temperature environment, and therefore, the membrane can exhibit the oil-repellent properties imparted by the CF₃ group without being impaired.

The linear fluorine-containing hydrocarbon group-containing monomer is preferably a compound having a linear fluorine-containing hydrocarbon group as a side chain. The linear fluorine-containing hydrocarbon group is bonded to the main chain directly or via a functional group such as an ester group or an ether group. The linear fluorine-containing hydrocarbon group-containing monomer may have a methacrylate structure or an acrylate structure in the main chain.

Examples of the linear fluorine-containing hydrocarbon group-containing monomer include:
a) CH₂=CR³COOR¹C₅F₁₀CH₂C₄F₉; and
b) CH₂=CR⁴COOR²CₙF₂ₙ₊₁.
Here, R¹ and R² are each independently an alkylene group having 1 to 12 carbon atoms or preferably 1 to 10 carbon atoms, or a phenylene group. The fluorine-containing hydrocarbon group-containing monomer represented by a) or b) is a linear fluoroalkyl group when R¹ or R² is an alkylene group. The term "linear" is intended to make it clear that the carbon skeleton of the fluorine-containing hydrocarbon group does not have two or more branched terminals, and is not intended to exclude the case where the monomer has a phenylene group as R¹ or R². In addition, R³ and R⁴ are each independently a hydrogen atom or a methyl group. The number n is preferably 1 to 16, and particularly preferably 4 to 8. It is desirable that the oil-repellent agent contain a copolymer obtained by crosslinking the compound represented by a) and/or b) with a crosslinkable polymer.

The compound represented by a) and/or b) that can be used as a linear fluorine-containing hydrocarbon group-containing monomer may be copolymerized with other monomers. Examples of the other monomers to be copolymerized include various (meth)acrylic monomers. However, the other monomers are not limited to (meth)acrylic monomers. Any of various monomers having ethylenically unsaturated bonds, such as tetrafluoroethylene, may be used. The copolymer may be a random copolymer or a block copolymer. When the linear fluorine-containing hydrocarbon group-containing monomer is a copolymer, the content of the compound represented by a) or b) in all the monomers is preferably 60 mol% or more, and particularly preferably 90 mol% or more, in order to avoid any difficulty in imparting oil repellency. The polymerization of the compound mentioned above can be performed according to a known method of polymerizing acrylic monomers, and can be carried out by solution polymerization or emulsion polymerization.

The crosslinkable monomer contains at least one selected from an alkoxy group-containing monomer, a hydroxy group-containing monomer, and a carboxyl group-containing monomer. The crosslinkable monomer may have a methacrylate structure or an acrylate structure in the main chain. As the alkoxy group-containing monomer, for example, 3-methacryloxypropyltriethoxysilane can be used. As the hydroxy group-containing monomer, for example, 2-hydroxyethyl methacrylate can be used. As the carboxyl group-containing monomer, for example, 2-carboxyethyl methacrylate can be used. The copolymerization ratio of the crosslinkable monomer is preferably 0.1 to 40 mol%, and particularly preferably 1 to 10 mol%, to suppress the melting of the oil-repellent agent at high temperatures and to avoid any difficulty in imparting the oil-repellent properties. Among these monomers, an alkoxy group-containing monomer and a carboxyl group-containing monomer are preferred because of their high crosslinking reactivity, and an alkoxy group-containing monomer is particularly preferred.

A crosslinking agent may be used to crosslink the crosslinkable monomer. The crosslinking agent is not particularly limited, and for example, a metal chelate compound such as an Al chelate compound can be used.

The average molecular weight of the copolymer containing the linear fluorine-containing hydrocarbon group-containing monomer and the crosslinkable monomer is not particularly limited, and is, for example, about 1000 to 500000 in terms of the number average molecular weight.

It is sufficient that a polymer constituting the oil-repellent agent contain, as constituents, a linear fluorine-containing hydrocarbon group-containing monomer and a crosslinkable monomer, and the polymer may contain any other compound as a monomer. The other monomer is, for example, a fluorine atom-free polymerizable monomer. The fluorine atom-free polymerizable monomer is, for example, a (meth)acrylic acid ester represented by the general formula:

R⁵(CH₂)ₚOCOCR=CH₂,

where R is a hydrogen atom or a methyl group, R⁵ is a hydrogen atom, an alkyl group, an alkoxyalkyl group, a cycloalkyl group, an aryl group, or a aralkyl group, and p is an integer of 1 to 20. Specific examples of the fluorine atom-free polymerizable monomer include monomers represented by the above general formula, such as acrylic acid esters or methacrylic acid esters esterified with: alkyl groups such as methyl, ethyl, propyl, isopropyl, n-butyl, n-hexyl, 2-ethylhexyl, n-octyl, lauryl, and stearyl groups; alkoxyalkyl groups such as methoxymethyl, 2-methoxyethyl, 2-ethoxyethyl, 2-butoxyethyl, and 3-ethoxypropyl groups; cycloalkyl groups such as a cyclohexyl group; aryl groups such as a phenyl group, and aralkyl groups such as a benzyl group. In addition, monoalkyl esters or dialkyl esters, such as monomethyl, dimethyl, monoethyl, diethyl, monopropyl, dipropyl, monobutyl, dibutyl, mono-2-ethylhexyl, di-2-ethylhexyl, monooctyl, and dioctyl esters of fumaric acid or maleic acid; vinyl esters, such as vinyl acetate and vinyl caprylate; etc. are also used.

The oil-repellent agent may be a copolymer consisting of a linear fluorine-containing hydrocarbon group-containing monomer and a crosslinkable monomer.

It is sufficient that the oil-repellent agent contain the copolymer containing a linear fluorine-containing hydrocarbon group-containing monomer and a crosslinkable monomer. Therefore, the oil-repellent agent may contain other components than the above-mentioned copolymer. The oil-repellent agent may contain, as the other components, any of the above-mentioned compounds given as examples of the fluorine atom-free polymerizable monomer.

The gas-permeable filter of the present embodiment can maintain excellent oil repellency even in a high-temperature environment. For example, the gas-permeable filter of the present embodiment can have high oil repellency such that, in an oil repellency test in which a droplet of pentadecane with a diameter of 5 mm is applied onto the surface of the gas-permeable filter in a 150°C environment and whether penetration of the droplet into the gas-permeable filter occurs within 30 seconds after the application of the droplet is evaluated by visual observation, it is determined that the penetration does not occur. In this case, it is desirable that the melting temperature of the oil-repellent agent be higher than 150°C.

Examples of the method of coating the surface of the stretched porous PTFE membrane with the oil-repellent agent include a method in which the stretched porous PTFE membrane is immersed in a solution prepared by dissolving the oil-repellent agent in a solvent, and a method in which the solution is applied or sprayed onto the stretched porous PTFE membrane. In order to prevent contraction of the stretched porous PTFE membrane after the membrane is coated with the oil-repellent agent, it is preferable to fix the edges of the membrane to a frame or the like. The appropriate concentration of the oil-repellent agent in the solvent varies depending on the coating method, and is about 0.1 to 10% by weight in the case of the method in which the gas-permeable filter is immersed in the solvent.

Examples of the method of forming a coating of the oil-repellent agent include: formation of a coating with a solution or a dispersion of the oil-repellent agent, by air spraying, electrostatic spraying, dip coating, spin coating, roll coating such as kiss coating and gravure coating, curtain flow coating, impregnation, or the like; and formation of a coating by electrodeposition coating or plasma polymerization. However, the coating method is not particularly limited as long as a desired coating can be formed.

### EXAMPLES

Hereinafter, the present invention is described in detail with reference to Examples and Comparative Examples, but the present invention is not limited to these examples in any way.

### (Example 1)

As a porous polytetrafluoroethylene membrane, a porous fluorine resin film manufactured by Nitto Denko Corporation "TEMISH (registered trademark) NTF 1131" (thickness: 0.1 mm) was used. A mixture containing 95 mol% of CH₂=CHCOOCH₂CH₂C₆F₁₃ as a linear fluorine-containing hydrocarbon group-containing monomer and 5 mol% of 3-methacryloxypropyltriethoxysilane as a crosslinkable monomer and an Al chelate crosslinking agent ("DF-40" manufactured by Shin-Etsu Chemical Co., Ltd.) were diluted with a diluent ("FS thinner" manufactured by Shin-Etsu Chemical Co., Ltd.) to prepare an oil-repellent treatment solution containing 3.0 wt.% of the mixture and 0.15 wt.% of the crosslinking agent. The NTF 131 membrane was fixed to a 20 cm × 20 cm frame to prevent contraction and immersed for about 3 seconds in the oil-repellent treatment solution maintained at 20°C. Then, the membrane was left at 100°C for about one hour so as to dry the solvent and to promote crosslinking between CH₂=CHCOOCH₂CH₂C₆F₁₃ and 3-methacryloxypropyltriethoxysilane. Thus, a coating of an oil-repellent agent was formed on the NTF 1131 membrane. As a result, an oil-repellent gas-permeable filter was obtained.

### (Example 2)

A gas-permeable filter was obtained in the same manner as in Example 1, except that a monomer represented by the general formula:

CH₂=C(CH₃)COOCH₂CH₂C₆F₁₃

was used as a linear fluorine-containing hydrocarbon group-containing monomer.

### (Example 3)

A gas-permeable filter was obtained in the same manner as in Example 1, except that a monomer represented by the general formula: CH₂=CHCOOCH₂CH₂C₈F₁₇ was used as a linear fluorine-containing hydrocarbon group-containing monomer.

### (Example 4)

A gas-permeable filter was obtained in the same manner as in Example 1, except that a monomer represented by the general formula: CH₂=C(CH₃)COOCH₂CH₂C₈F₁₇ was used as a linear fluorine-containing hydrocarbon group-containing monomer.

### (Example 5)

A gas-permeable filter was obtained in the same manner as in Example 1, except that a monomer represented by the general formula: CH₂=CHCOOCH₂CH₂C₅F₁₀CH₂C₄F₉ was used as a linear fluorine-containing hydrocarbon group-containing monomer.

### (Example 6)

A gas-permeable filter was obtained in the same manner as in Example 1, except that a monomer represented by the general formula: CH₂=C(CH₃)COOCH₂CH₂C₅F₁₀CH₂C₄F₉ was used as a linear fluorine-containing hydrocarbon group-containing monomer.

### (Example 7)

A gas-permeable filter was obtained in the same manner as in Example 1, except that 2-hydroxyethyl methacrylate was used as a crosslinkable monomer.

### (Example 8)

A gas-permeable filter was obtained in the same manner as in Example 2, except that 2-hydroxyethyl methacrylate was used as a crosslinkable monomer.

### (Example 9)

A gas-permeable filter was obtained in the same manner as in Example 3, except that 2-hydroxyethyl methacrylate was used as a crosslinkable monomer.

### (Example 10)

A gas-permeable filter was obtained in the same manner as in Example 4, except that 2-hydroxyethyl methacrylate was used as a crosslinkable monomer.

### (Example 11)

A gas-permeable filter was obtained in the same manner as in Example 5, except that 2-hydroxyethyl methacrylate was used as a crosslinkable monomer.

### (Example 12)

A gas-permeable filter was obtained in the same manner as in Example 6, except that 2-hydroxyethyl methacrylate was used as a crosslinkable monomer.

### (Example 13)

A gas-permeable filter was obtained in the same manner as in Example 1, except that 2-carboxyethyl methacrylate was used as a crosslinkable monomer.

### (Example 14)

A gas-permeable filter was obtained in the same manner as in Example 2, except that 2-carboxyethyl methacrylate was used as a crosslinkable monomer.

### (Example 15)

A gas-permeable filter was obtained in the same manner as in Example 3, except that 2-carboxyethyl methacrylate was used as a crosslinkable monomer.

### (Example 16)

A gas-permeable filter was obtained in the same manner as in Example 4, except that 2-carboxyethyl methacrylate was used as a crosslinkable monomer.

### (Example 17)

A gas-permeable filter was obtained in the same manner as in Example 5, except that 2-carboxyethyl methacrylate was used as a crosslinkable monomer.

### (Example 18)

A gas-permeable filter was obtained in the same manner as in Example 6, except that 2-carboxyethyl methacrylate was used as a crosslinkable monomer.

### (Comparative Example 1)

As a porous polytetrafluoroethylene membrane, a porous fluorine resin film manufactured by Nitto Denko Corporation "TEMISH (registered trademark) NTF 1131" (thickness: 0.1 mm) was used without any treatment to prepare a gas-permeable filter without a coating of an oil-repellent agent.

### (Comparative Example 2)

A gas-permeable filter was obtained in the same manner as in Example 1, except that a crosslinkable monomer was not used, that is, the content of a linear fluorine-containing hydrocarbon group-containing monomer was 100 mol% and the content of a crosslinkable monomer was 0 mol%.

### (Comparative Example 3)

A gas-permeable filter was obtained in the same manner as in Example 2, except that a crosslinkable monomer was not used, that is, the content of a linear fluorine-containing hydrocarbon group-containing monomer was 100 mol% and the content of a crosslinkable monomer was 0 mol%.

### (Comparative Example 4)

A gas-permeable filter was obtained in the same manner as in Example 3, except that a crosslinkable monomer was not used, that is, the content of a linear fluorine-containing hydrocarbon group-containing monomer was 100 mol% and the content of a crosslinkable monomer was 0 mol%.

### (Comparative Example 5)

A gas-permeable filter was obtained in the same manner as in Example 4, except that a crosslinkable monomer was not used, that is, the content of a linear fluorine-containing hydrocarbon group-containing monomer was 100 mol% and the content of a crosslinkable monomer was 0 mol%.

### (Comparative Example 6)

A gas-permeable filter was obtained in the same manner as in Example 5, except that a crosslinkable monomer was not used, that is, the content of a linear fluorine-containing hydrocarbon group-containing monomer was 100 mol% and the content of a crosslinkable monomer was 0 mol%.

### (Comparative Example 7)

A gas-permeable filter was obtained in the same manner as in Example 6, except that a crosslinkable monomer was not used, that is, the content of a linear fluorine-containing hydrocarbon group-containing monomer was 100 mol% and the content of a crosslinkable monomer was 0 mol%.

For the gas-permeable filters of Examples 1 to 18 and Comparative Examples 1 to 7 obtained as described above, a melting test and an oil-repellency test were performed.

As the melting test, nano-thermal analysis (nanoTA) was performed to determine whether the melting of the oil-repellent agent occurred at 150°C. NanoTA is a technique in which a target point of the surface of a specimen is heated by a microprobe (thermal cantilever) equipped with a heating mechanism so as to measure the displacement of the cantilever (i.e., the displacement of the cantilever caused by the entry thereof into the specimen) in the process of increasing the temperature of the target point and thereby to determine, based on the displacement, whether the melting of the surface of the specimen has occurred. Herein, whether the melting of the oil-repellent agent in each specimen occurred at 150°C was determined using a local modulation thermal analyzer "Ztherm" manufactured by Asylum Technology Co., Ltd. In this melting test, a piece having a predetermined shape cut from the gas-permeable filter obtained in each of Examples and Comparative Examples was used as a specimen. Table 1 shows the results.

The oil repellency test was performed in accordance with "Textiles-Oil repellency-Hydrocarbon resistance test" specified in ISO 14419. Specifically, a droplet of an organic solvent with a diameter of about 5 mm was applied, using a pipette, onto the surface of the gas-permeable filter obtained in each of Examples and Comparative Examples at ordinary temperatures, and whether penetration of the droplet into the filter occurred within 30 seconds after the application of the droplet was determined by visual observation. As the organic solvent, pentadecane was used. For the penetration of the droplet, it was determined that the "penetration occurred" when the droplet was absorbed into the porous membrane or when the color of the porous membrane changed due to the penetration of the droplet. In order to evaluate the oil repellency in a high-temperature environment, the gas-permeable filter obtained in each of Examples and Comparative Examples was heated on a heating stage and then subjected to the same oil repellency test. In this test, the temperature setting was changed from 100°C to 150°C in increments of 10°C. The rate of temperature rise was 10°C/min. In order to maintain the temperature of the specimen constant, the temperature of the heating stage was maintained at the set temperature for about 5 minutes after it reached that set temperature and then the oil repellency test was performed. Table 1 shows the results.

**[Table 1]**

| | Crosslinkable monomer | Linear fluorine-containing hydrocarbon group-containing monomer | Melting at 150°C | Oil-repellent properties | |
|---|---|---|---|---|---|
| | | | | Ordinary temperature | 150°C |
| Ex. 1 | 3-methacryloxy propyl triethoxysilane | CH₂=CHCOOCH₂CH₂C₆F₁₃ | Melting did not occur | Penetration did not occur | Penetration did not occur |
| Ex. 2 | | CH₂=C(CH₃)COOCH₂CH₂C₆F₁₃ | Melting did not occur | Penetration did not occur | Penetration did not occur |
| Ex. 3 | | CH₂=CHCOOCH₂CH₂C₈F₁₇ | Melting did not occur | Penetration did not occur | Penetration did not occur |
| Ex. 4 | | CH₂=C(CH₃)COOCH₂CH₂C₈F₁₇ | Melting did not occur | Penetration did not occur | Penetration did not occur |
| Ex. 5 | | CH₂=CHCOOCH₂CH₂C₅F₁₀CH₂C₄F₉ | Melting did not occur | Penetration did not occur | Penetration did not occur |
| Ex. 6 | | CH₂=C(CH₃)COOCH₂CH₂C₅F₁₀CH₂C₄F₉ | Melting did not occur | Penetration did not occur | Penetration did not occur |
| Ex. 7 | 2-hydroxyethyl methacrylate | CH₂=CHCOOCH₂CH₂C₆F₁₃ | Melting did not occur | Penetration did not occur | Penetration did not occur |
| Ex. 8 | | CH₂=C(CH₃)COOCH₂CH₂C₆F₁₃ | Melting did not occur | Penetration did not occur | Penetration did not occur |
| Ex. 9 | | CH₂=CHCOOCH₂CH₂C₈F₁₇ | Melting did not occur | Penetration did not occur | Penetration did not occur |
| Ex. 10 | | CH₂=C(CH₃)COOCH₂CH₂C₈F₁₇ | Melting did not occur | Penetration did not occur | Penetration did not occur |
| Ex. 11 | | CH₂=CHCOOCH₂CH₂C₅F₁₀CH₂C₄F₉ | Melting did not occur | Penetration did not occur | Penetration did not occur |
| Ex. 12 | | CH₂=C(CH₃)COOCH₂CH₂C₅F₁₀CH₂C₄F₉ | Melting did not occur | Penetration did not occur | Penetration did not occur |
| Ex. 13 | 2-carboxyethyl methacrylate | CH₂=CHCOOCH₂CH₂C₆F₁₃ | Melting did not occur | Penetration did not occur | Penetration did not occur |
| Ex. 14 | | CH₂=C(CH₃)COOCH₂CH₂C₆F₁₃ | Melting did not occur | Penetration did not occur | Penetration did not occur |
| Ex. 15 | | CH₂=CHCOOCH₂CH₂C₈F₁₇ | Melting did not occur | Penetration did not occur | Penetration did not occur |
| Ex. 16 | | CH₂=C(CH₃)COOCH₂CH₂C₈F₁₇ | Melting did not occur | Penetration did not occur | Penetration did not occur |
| Ex. 17 | | CH₂=CHCOOCH₂CH₂C₅F₁₀CH₂C₄F₉ | Melting did not occur | Penetration did not occur | Penetration did not occur |
| Ex. 18 | | CH₂=C(CH₃)COOCH₂CH₂C₅FₗoCH₂C₄F₉ | Melting did not occur | Penetration did not occur | Penetration did not occur |
| Com. Ex. 1 | Oil-repellent agent was not used | | - | Penetration occurred | Penetration occurred |
| Com. Ex. 2 | None | CH₂=CHCOOCH₂CH₂C₆F₁₃ | Melting occurred | Penetration did not occur | Penetration occurred |
| Com. Ex. 3 | | CH₂=C(CH₃)COOCH₂CH₂C₆F₁₃ | Melting occurred | Penetration did not occur | Penetration occurred |
| Com. Ex. 4 | | CH₂=CHCOOCH₂CH₂C₈F₁₇ | Melting occurred | Penetration did not occur | Penetration occurred |
| Com. Ex. 5 | | CH₂=C(CH₃)COOCH₂CH₂C₈F₁₇ | Melting occurred | Penetration did not occur | Penetration occurred |
| Com. Ex. 6 | | CH₂=CHCOOCH₂CH₂C₅F₁₀CH₂C₄F₉ | Melting occurred | Penetration did not occur | Penetration occurred |
| Com. Ex. 7 | | CH₂=C(CH₃)COOCH₂CH₂C₅F₁₀CH₂C₄F₉ | Melting occurred | Penetration did not occur | Penetration occurred |

The gas-permeable filters of Examples 1 to 18 each obtained by using an oil-repellent agent containing a copolymer of a linear fluorine-containing hydrocarbon group-containing monomer and a crosslinkable monomer exhibited good oil-repellent properties even in a high-temperature environment. In contrast, the gas-permeable filters of Comparative Examples 2 to 7 each obtained by using an oil-repellent agent consisting of a polymer of a linear fluorine-containing hydrocarbon group-containing monomer exhibited good oil-repellent properties at ordinary temperatures, but in a high-temperature environment, they could not maintain their oil-repellent properties due to the penetration of the organic solvent. As for the gas-permeable filter of Comparative Example 1 obtained without using an oil-repellent agent, the penetration of the organic solvent occurred both at ordinary and high temperatures, and this filter did not have oil repellency enough to meet the practical requirements.

### INDUSTRIAL APPLICABILITY

Since the gas-permeable filter of the present invention can maintain its excellent oil-repellent properties even in a high-temperature environment, it can be used as a gas-permeable filter for use in a device that requires resistance to high temperatures, for example, in an automotive electrical/electronic component.

## Claims

1. A gas-permeable filter having oil repellency, the gas-permeable filter comprising a porous membrane having a surface coated with an oil-repellent agent, wherein
the oil-repellent agent comprises a copolymer comprising a linear fluorine-containing hydrocarbon group-containing monomer and a crosslinkable monomer, and
the crosslinkable monomer comprises at least one selected from an alkoxy group-containing monomer, a hydroxy group-containing monomer, and a carboxyl group-containing monomer.

2. The gas-permeable filter according to claim 1, wherein the crosslinkable monomer has a methacrylate structure or an acrylate structure in a main chain.

3. The gas-permeable filter according to claim 1, wherein the linear fluorine-containing hydrocarbon group-containing monomer has a methacrylate structure or an acrylate structure in a main chain.

4. The gas-permeable filter according to claim 1, wherein the alkoxy group-containing monomer is 3-methacryloxypropyltriethoxysilane.

5. The gas-permeable filter according to claim 1, wherein the hydroxy group-containing monomer is 2-hydroxyethyl methacrylate.

6. The gas-permeable filter according to claim 1, wherein the carboxyl group-containing monomer is 2-carboxyethyl methacrylate.

7. The gas-permeable filter according to claim 1, wherein the porous membrane is a stretched porous polytetrafluoroethylene membrane.

8. The gas-permeable filter according to claim 1, wherein in an oil repellency test in which a droplet of pentadecane with a diameter of 5 mm is applied onto a surface of the gas-permeable filter in a 150°C environment and whether penetration of the droplet into the gas-permeable filter occurs within 30 seconds after the application of the droplet is evaluated by visual observation, it is determined that the penetration does not occur.

9. The gas-permeable filter according to claim 1, wherein the oil-repellent agent has a melting temperature higher than 150°C.
